# EUROPÄISCHE PATENTANMELDUNG

(11) **EP 4 686 057 A1**
(43) Veröffentlichungstag der Anmeldung: **28.01.2026**
(21) Anmeldenummer: 24191050.4
(22) Anmeldetag: 26.07.2024
(51) Int. Cl.: H02M 1/00, H02M 1/42, H02M 7/162, H02M 1/12, H02M 1/15

(54) **VERBESSERTE KONVERTERTOPOLOGIE FÜR ELEKTROLYSEANLAGEN**

(71) Anmelder: Siemens Aktiengesellschaft, 80333 München (DE)
(72) Erfinder: Kucka, Jakub, 91052 Erlangen (DE); Hofstetter, Patrick, 91056 Erlangen (DE)
(74) Vertreter: Siemens Patent Attorneys

(57) **Zusammenfassung**

Eine Energieversorgungseinrichtung (2) zum Versorgen einer Elektrolyseanlage (1) mit elektrischer Energie weist einen Gleichrichter (3) und eine erste Transformatoranordnung (4) mit einer Primärseite (5) und einer Sekundärseite (6) auf. Der Gleichrichter (3) bezieht über die erste Transformatoranordnung (4) aus einem Wechselspannungsnetz (7) elektrische Energie und führt der Elektrolyseanlage (1) die aus dem Wechselspannungsnetz (7) bezogene elektrische Energie über einen Gleichspannungszwischenkreis (8) zu. Die Energieversorgungseinrichtung (2) weist eine Zusatzeinheit (9) auf, die eine zweite Transformatoranordnung (10) mit einer Primärseite (13) und einer Sekundärseite (14), einen Transistorstromrichter (11) und einen Gleichspannungswandler (12) aufweist. Die Primärseite (13) der zweiten Transformatoranordnung (10) ist mit der Primärseite (5) oder der Sekundärseite (6) der ersten Transformatoranordnung (4) in Reihe geschaltet. Der Transistorstromrichter (11) ist mit der Sekundärseite (14) der zweiten Transformatoranordnung (10) und dem Gleichspannungswandler (12) verbunden. Der Gleichspannungswandler (12) ist mit dem Gleichspannungszwischenkreis (8) des Gleichrichters (3) verbunden.

## Beschreibung

Die vorliegende Erfindung geht aus von einer Energieversorgungseinrichtung zum Versorgen einer Elektrolyseanlage mit elektrischer Energie,
- wobei die Energieversorgungseinrichtung einen Gleichrichter und eine erste Transformatoranordnung mit einer Primärseite und einer Sekundärseite aufweist,
- wobei der Gleichrichter über die erste Transformatoranordnung aus einem Wechselspannungsnetz elektrische Energie bezieht und der Elektrolyseanlage die aus dem Wechselspannungsnetz bezogene elektrische Energie über einen Gleichspannungszwischenkreis zuführt,
- wobei die Energieversorgungseinrichtung eine Zusatzeinheit aufweist,
- wobei die Zusatzeinheit eine zweite Transformatoranordnung mit einer Primärseite und einer Sekundärseite und einen Transistorstromrichter aufweist,
- wobei die Primärseite der zweiten Transformatoranordnung mit der Primärseite oder der Sekundärseite der ersten Transformatoranordnung in Reihe geschaltet ist,
- wobei der Transistorstromrichter mit der Sekundärseite der zweiten Transformatoranordnung und dem Gleichspannungszwischenkreis des Gleichrichters verbunden ist.

Die beiden Transformatoranordnungen können als voneinander getrennte Transformatoranordnungen ausgebildet sein. Oftmals sind sie zu einer gemeinsamen Transformatoreinheit kombiniert. Weiterhin können die Transformatoranordnungen manuell oder elektronisch umschaltbare Anzapfungen aufweisen. Dies gilt gleichermaßen im Stand der Technik und für die vorliegende Erfindung.

Die vorliegende Erfindung geht weiterhin aus von einem Betriebsverfahren zum Betreiben einer derartigen Energieversorgungseinrichtung,
- wobei der Transistorstromrichter von einer Steuereinrichtung derart gesteuert wird, dass eine Amplitude der dem Gleichrichter zugeführten Wechselspannung derart eingestellt wird, dass der Gleichrichter zum Gleichspannungszwischenkreis hin ein vorbestimmtes Spannungsniveau zur Verfügung stellt, und beim Betrieb des Gleichrichters auftretende Netzrückwirkungen auf das Wechselspannungsnetz so weit wie möglich ausgeglichen werden.

Die vorliegende Erfindung geht weiterhin aus von einem Steuerprogramm, wobei das Steuerprogramm Befehle umfasst, die bei ihrer Ausführung durch eine Steuereinrichtung für eine derartige Energieversorgungseinrichtung die Steuereinrichtung veranlassen, die Energieversorgungseinrichtung gemäß einem derartigen Betriebsverfahren zu steuern.

Die vorliegende Erfindung geht weiterhin aus von einer Steuereinrichtung, wobei die Steuereinrichtung mit einem derartigen Steuerprogramm programmiert ist, so dass die Steuereinrichtung im Betrieb eine derartige Energieversorgungseinrichtung gemäß einem derartigen Betriebsverfahren steuert.

Die genannten Gegenstände sind bekannt.

Eine Elektrolyseanlage benötigt einen hohen Strom (oftmals etliche kA) bei einer relativ niedrigen Spannung (meist im Bereich von mehreren 100 V). Der Strom muss der Elektrolyseanlage als Gleichstrom zugeführt werden. Zur Versorgung der Elektrolyseanlage mit der benötigten elektrischen Energie aus einem üblichen Wechselspannungsnetz ist daher eine Energieversorgungseinrichtung erforderlich, welche die entsprechende Gleichrichtung und oftmals auch eine Spannungsanpassung vornimmt.

Die Spannungsanpassung erfolgt am einfachsten über Transformatoreinrichtungen, die Gleichrichtung über Gleichrichter.

Gleichrichter sind in den verschiedensten Ausgestaltungen bekannt, angefangen von einfachen Diodengleichrichtern über Thyristorgleichrichter bis zu rückspeisefähigen Transistorstromrichtern. Aus Kostengründen ist es im vorliegenden Fall sinnvoll, einen Thyristorgleichrichter, alternativ einen Diodengleichrichter, zu verwenden.

Ein Thyristorgleichrichter ist zwar relativ kostengünstig, arbeitet bei einer nur teilweisen Aussteuerung jedoch relativ ineffizient. Eine Anpassung der Ansteuerung der Energieversorgungseinrichtung ist jedoch erforderlich oder zumindest sinnvoll, um zum einen Änderungen beim Betrieb der Elektrolyseanlage und zum anderen Spannungsschwankungen im Wechselspannungsnetz kompensieren zu können. Ein Diodengleichrichter ist überhaupt nicht steuerbar.

Ein weiterer Nachteil eines Thyristorgleichrichters und auch eines Diodengleichrichters sind die vergleichsweise großen Netzrückwirkungen. Zur Reduzierung der Netzrückwirkungen ist bereits vorgeschlagen worden, parallel zum Gleichrichter eine Zusatzeinheit der vorstehend erläuterten Art anzuordnen. Die Zusatzeinheit kann bei entsprechendem Betrieb die Netzrückwirkungen deutlich reduzieren, eventuell sogar vollständig kompensieren.

Ein weiterer Nachteil eines Thyristorgleichrichters und auch eines Diodengleichrichters ist die vergleichsweise große Stromwelligkeit (ripple) auf der Gleichspannungsseite. Für die Reduzierung der Stromwelligkeit ist die Zusatzeinheit des Standes der Technik ungeeignet. Insbesondere würde ein Versuch, eine derartige Stromwelligkeit mittels des Transistorstromrichters auszugleichen, zu Netzrückwirkungen führen. Ein weiterer Nachteil besteht darin, dass im Falle eines Kurzschluss auf der Gleichspannungsseite der Transistorstromrichter ungeschützt wäre und wahrscheinlich zerstört würde.

Die Aufgabe der vorliegenden Erfindung besteht darin, Möglichkeiten zu schaffen, mittels derer nicht nur die Netzrückwirkungen, sondern auch die Stromwelligkeit reduziert und eventuell sogar kompensiert werden können.

Die Aufgabe wird durch eine Energieversorgungseinrichtung mit den Merkmalen des Anspruchs 1 gelöst. Vorteilhafte Ausgestaltungen der Energieversorgungseinrichtung sind Gegenstand der abhängigen Ansprüche 2 bis 6.

Erfindungsgemäß wird eine Energieversorgungseinrichtung der eingangs genannten Art dadurch ausgestaltet,
- dass die Zusatzeinheit zusätzlich zur zweiten Transformatoranordnung und dem Transistorstromrichter auch einen Gleichspannungswandler aufweist,
- dass der Transistorstromrichter mit dem Gleichspannungswandler verbunden ist und
- dass der Gleichspannungswandler mit dem Gleichspannungszwischenkreis des Gleichrichters verbunden ist.

Im Ergebnis ist also der Gleichspannungswandler zwischen dem Transistorstromrichter und dem Gleichspannungszwischenkreis des Gleichrichters angeordnet. Ein Gleichspannungswandler kann auf eine geänderte Ansteuerung erheblich schneller reagieren als ein Transistorstromrichter. Der Gleichspannungswandler ist daher in der Lage, die Stromwelligkeit des Gleichspannungszwischenkreises des Gleichrichters zumindest zu reduzieren. Insbesondere ist der Gleichspannungswandler in der Lage, kontrolliert gewünschte Ströme in den Gleichspannungszwischenkreis des Gleichrichters einzuspeisen. Aufgrund der Reduzierung bzw. Kompensation der Stromwelligkeit durch den Gleichspannungswandler ist es möglich, dass der Gleichspannungszwischenkreis des Gleichrichters keine oder zumindest eine erheblich kleinere Filterinduktivität als im Stand der Technik aufweist. Die Kosten für eine Filterinduktivität können daher entfallen oder zumindest deutlich reduziert werden.

Vorzugsweise ist die Zusatzeinheit kleiner als der Gleichrichter dimensioniert, so dass über die Zusatzeinheit eine kleinere elektrische Energie fließt als über den Gleichrichter. Diese Ausgestaltung ist insbesondere unter Kostenaspekten von Vorteil. Das Ausmaß an elektrischer Energie, das über den Transistorstromrichter fließt, liegt oftmals bei nur 20 % oder weniger, insbesondere 15 % oder weniger, der über den Gleichrichter fließenden elektrischen Energie.

Vorzugsweise ist der Gleichspannungswandler als verschachtelter Buck-Boost-Wandler ausgebildet. Diese Ausgestaltung ist einfach und besonders flexibel betreibbar.

Es ist möglich, dass der Gleichspannungswandler als potenzialtrennender Gleichspannungswandler ausgebildet ist. Dies kann im Einzelfall erforderlich sein.

Vorzugsweise ist der Transistorstromrichter als Spannungsgleichrichter ausgebildet. Diese Ausgestaltung ist weit verbreitet und ausgereift.

Im Regelfall ist der Transistorstromrichter als einen bidirektionalen Energiefluss ermöglichender Umrichter ausgebildet. Dadurch ergibt sich für eine bestimmte Auslegung des Transistorstromrichters ein größerer Bereich, in dem der Betrieb der Energieversorgungseinrichtung stabilisiert werden kann. Im Einzelfall kann der Transistorstromrichter aber auch als nur einen unidirektionalen Energiefluss ermöglichender Gleichrichter ausgebildet sein.

Die Aufgabe wird durch ein Betriebsverfahren mit den Merkmalen des Anspruchs 7 gelöst. Vorteilhafte Ausgestaltungen des Betriebsverfahrens sind Gegenstand der abhängigen Ansprüche 8 und 9.

Erfindungsgemäß wird ein Betriebsverfahren der eingangs genannten Art dadurch ausgestaltet, dass - zusätzlich zur Ansteuerung des Transistorstromrichters - der Gleichspannungswandler von der Steuereinrichtung unter Berücksichtigung der elektrischen Bilanz des Transistorstromrichters, wie sie sich durch die Ansteuerung des Transistorstromrichters ergibt, derart angesteuert wird, dass Stromschwankungen im Gleichspannungszwischenkreis des Gleichrichters weit wie möglich ausgeglichen werden.

Vorzugsweise wird die Zusatzeinheit zum Ausgleichen der Spannungsschwankungen in Abhängigkeit von einer eingangsseitig des Gleichrichters erfassten Wechselspannung von der Steuereinrichtung derart gesteuert, dass sie nach Bedarf Energie in den Gleichspannungszwischenkreis des Gleichrichters einspeist oder Energie aus dem Gleichspannungszwischenkreis des Gleichrichters entnimmt. Dadurch ergibt sich für eine bestimmte Auslegung des Transistorstromrichters ein größerer Bereich, in dem der Betrieb der Energieversorgungseinrichtung stabilisiert werden kann.

Vorzugsweise ist der Gleichrichter als Thyristorgleichrichter ausgebildet ist und wird von der Steuereinrichtung im stationären Betrieb mit einem konstanten Steuerwinkel gesteuert, insbesondere mit einem Steuerwinkel von 0°.Diese Ausgestaltung ist insbesondere unter Kostenaspekten von Vorteil.

Die Aufgabe wird weiterhin durch ein Steuerprogramm mit den Merkmalen des Anspruchs 10 gelöst. Erfindungsgemäß veranlassen die Befehle die Steuereinrichtung dazu, eine erfindungsgemäße Energieversorgungseinrichtung gemäß einem erfindungsgemäßen Betriebsverfahren zu steuern.

Die Aufgabe wird weiterhin durch eine Steuereinrichtung mit den Merkmalen des Anspruchs 11 gelöst. Erfindungsgemäß ist die Steuereinrichtung mit einem erfindungsgemäßen Steuerprogramm programmiert, so dass die Steuereinrichtung eine erfindungsgemäße Energieversorgungseinrichtung gemäß einem erfindungsgemäßen Betriebsverfahren steuert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: eine Elektrolyseanlage eine Energieversorgungseinrichtung und ein Wechselspannungsnetz,
- FIG 2: eine Modifikation von FIG 1,
- FIG 3: einen Transistorstromrichter,
- FIG 4: einen Gleichspannungswandler,
- FIG 5: einen weiteren Gleichspannungswandler und
- FIG 6: ein Ablaufdiagramm.

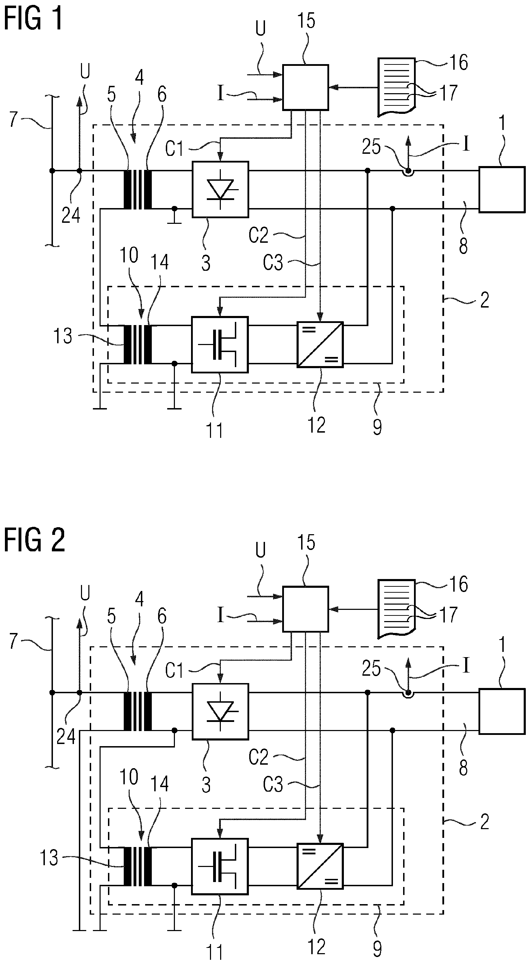

Gemäß FIG 1 soll eine Elektrolyseanlage 1 mittels einer Energieversorgungseinrichtung 2 mit elektrischer Energie versorgt werden. Zu diesem Zweck weist die Energieversorgungseinrichtung 2 zunächst einen Gleichrichter 3 und eine erste Transformatoranordnung 4 auf. Die Transformatoranordnung 4 weist ihrerseits eine Primärseite 5 und eine Sekundärseite 6 auf. Die Primärseite 5 ist an ein Wechselspannungsnetz 7 angeschlossen. Die Sekundärseite 6 speist den Gleichrichter 3. Der Gleichrichter 3 bezieht somit über die erste Transformatoranordnung 4 aus dem Wechselspannungsnetz 7 elektrische Energie. Der Gleichrichter 3 führt eine Gleichrichtung der bezogenen elektrischen Energie durch und führt die gleichgerichtete elektrische Energie der Elektrolyseanlage 1 über einen Gleichspannungszwischenkreis 8 zu. Das Wechselspannungsnetz 7 ist in der Regel mehrphasig ausgebildet. Dementsprechend ist die erste Transformatoranordnung 4 in der Regel ebenfalls mehrphasig ausgebildet. Meist beträgt die Anzahl an Phasen drei. Der Gleichrichter 3 ist in der Regel als Thyristorgleichrichter ausgebildet. In Einzelfällen kann er als Diodengleichrichter ausgebildet sein.

Die Energieversorgungseinrichtung 2 weist weiterhin eine Zusatzeinheit 9 auf. Die Zusatzeinheit 9 weist ihrerseits eine zweite Transformatoranordnung 10, einen Transistorstromrichter 11 und einen Gleichspannungswandler 12 auf. Die zweite Transformatoranordnung 10 weist eine Primärseite 13 und eine Sekundärseite 14 auf. Die Primärseite 13 der zweiten Transformatoranordnung 10 ist mit der Primärseite 5 der ersten Transformatoranordnung 4 in Reihe geschaltet. Der Transistorstromrichter 11 ist einerseits mit der Sekundärseite 14 der zweiten Transformatoranordnung 10 und andererseits mit dem Gleichspannungswandler 12 verbunden. Die Anzahl an Phasen der zweiten Transformatoranordnung 10 und des Transistorstromrichters 11 korrespondiert in aller Regel mit der Anzahl an Phasen der ersten Transformatoranordnung 4 und des Gleichrichters 3. Der Gleichspannungswandler 12 schließlich ist mit dem Gleichspannungszwischenkreis 8 verbunden. Er nimmt eine Spannungsumsetzung von einer eingangsseitigen Gleichspannung auf eine ausgangsseitige Gleichspannung oder umgekehrt vor.

Die Energieversorgungseinrichtung 2 wird von einer Steuereinrichtung 15 gesteuert. In dem üblichen Fall, dass der Gleichrichter 3 als Thyristorgleichrichter ausgebildet, generiert die Steuereinrichtung 15 Steuerbefehle C1, C2, C3 für den Thyristorgleichrichter 3, den Transistorstromrichter 11 und den Gleichspannungswandler 12. Falls der Gleichrichter 3 als Diodengleichrichter ausgebildet ist, generiert die Steuereinrichtung 15 nur die Steuerbefehle C2 und C3 für den Transistorstromrichter 11 und den Gleichspannungswandler 12. Die Wirkungsweise der Steuereinrichtung 15 wird von einem Steuerprogramm 16 bestimmt, mit dem die Steuereinrichtung 15 programmiert ist. Das Steuerprogramm 16 umfasst Befehle 17. Die Befehle 17 sind Programmbefehle, also Befehle, die von der Steuereinrichtung 15 ausgeführt werden. Sie veranlassen bei ihrer Ausführung durch die Steuereinrichtung 15 die Steuereinrichtung 15 dazu, die Energieversorgungseinrichtung 2 entsprechend zu steuern. Das zugehörige Betriebsverfahren wird später erläutert werden.

FIG 2 zeigt eine geringfügige Modifikation von FIG 1. Der Unterschied zu FIG 1 besteht darin, dass die Primärseite 13 der zweiten Transformatoranordnung 10 nicht mit der Primärseite 5, sondern mit der Sekundärseite 6 der ersten Transformatoranordnung 4 in Reihe geschaltet ist. Im übrigen ist die Ausgestaltung identisch zu FIG 1.

Gemäß den FIG 1 und 2 ist die Zusatzeinheit 9 vorzugsweise kleiner dimensioniert als der Gleichrichter 3. Über die Zusatzeinheit 9 fließt also eine kleinere elektrische Energie als über den Gleichrichter 3. Die kleinere Dimensionierung ist in den FIG 1 und 2 daran erkennbar, dass der Transistorstromrichter 11 und der Gleichspannungswandler 12 kleiner als der Gleichrichter 3 dargestellt sind.

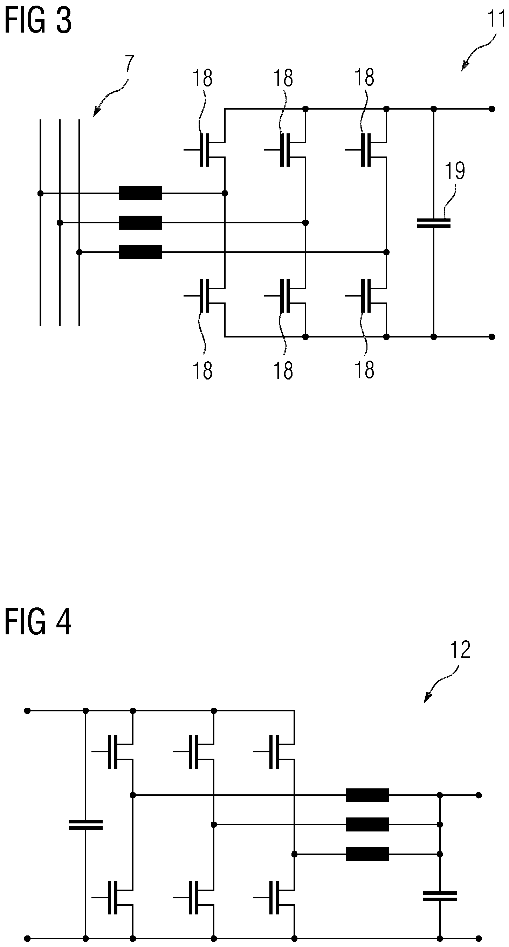

Der Transistorstromrichter 11 ist entsprechend der Darstellung in FIG 3 vorzugsweise als Spannungsgleichrichter ausgebildet. Transistoren 18, welche die Gleichrichtung als solche vornehmen, ist also auf der Gleichspannungsseite ein Kondensator 19 nachgeordnet. Der Transistorstromrichter 11 ermöglicht aufgrund der Verschaltung von FIG 3 insbesondere auch einen bidirektionalen Energiefluss, also sowohl von der Sekundärseite 14 der zweiten Transformatoranordnung 10 zum Gleichspannungswandler 12 als auch umgekehrt vom Gleichspannungswandler 12 zur Sekundärseite 14 der zweiten Transformatoranordnung 10. Zum Wechselspannungsnetz 7 hin angeordnete Drosseln sind nicht mit einem Bezugszeichen versehen. Den Transistoren 18 parallelgeschaltete Dioden sind ebenfalls zwar vorhanden, in FIG 3 der Übersichtlichkeit halber jedoch nicht mit dargestellt.

Der Gleichspannungswandler 12 ist entsprechend der Darstellung in FIG 4 vorzugsweise als verschachtelter Buck-Boost-Wandler ausgebildet. Die schaltungstechnische Ausgestaltung ist im Ergebnis ähnlich zu dem Transistorstromrichter 11 mit dem Unterschied, dass die Drosseln bei dem Gleichspannungswandler 12 auf einen gemeinsamen Knotenpunkt geführt sind, dem ein Kondensator nachgeordnet ist. Vorhandene Drosseln sind wieder nicht mit einem Bezugszeichen versehen. Den Transistoren 18 parallelgeschaltete Dioden sind wieder zwar vorhanden, in FIG 4 der Übersichtlichkeit halber jedoch nicht mit dargestellt.

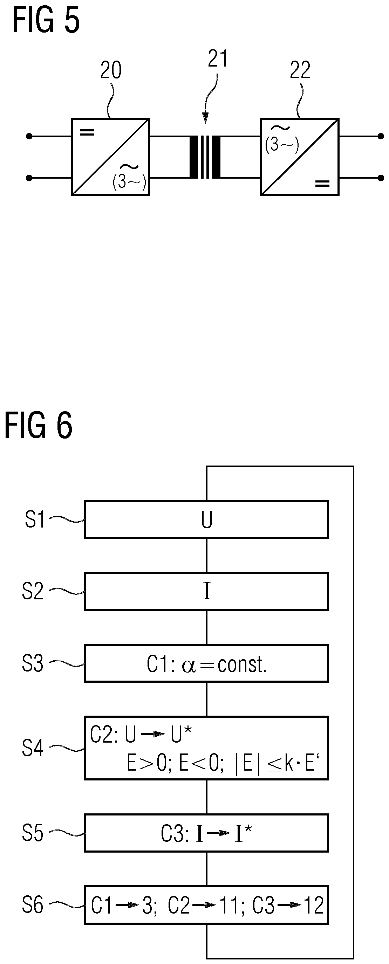

Alternativ kann der Gleichspannungswandler 12 gemäß FIG 5 als potenzialtrennender Gleichspannungswandler ausgebildet sein. Beispielsweise kann der Gleichspannungswandler 12 in diesem Fall einen Wechselrichter 20, einen dem Wechselrichter 20 nachgeordneten Transformator 21 und einen dem Transformator 21 nachgeordneten Gleichrichter 22 umfassen. Gegebenenfalls kann dem Gleichrichter 22 eine weitere Schaltung vor- oder nachgeordnet sein, die analog zu der Schaltung von FIG 4 aufgebaut ist.

Aufgrund des Gleichspannungswandlers 12 kann eine Stromwelligkeit, die ausgangsseitig des Gleichrichters 3 (also auf der Gleichspannungsseite) entsteht und von dem Transistorstromrichter 11 als solchen nicht kompensiert werden kann, kompensiert oder zumindest reduziert werden. Eine im Stand der Technik erforderliche Filterinduktivität 23 kann daher entfallen oder zumindest deutlich kleiner ausgelegt werden. Dieser Sachverhalt ist in den FIG 1 und 2 dadurch angedeutet, dass die Filterinduktivität 23 zwar eingezeichnet, aber durchgestrichen ist.

Die Steuereinrichtung 15 führt - veranlasst durch die Befehle 17 - vorzugsweise ein Betriebsverfahren aus, das nachstehend in Verbindung mit FIG 6 näher erläutert wird.

Gemäß FIG 6 nimmt die Steuereinrichtung 15 in einem Schritt S1 (mindestens) eine Spannung U entgegen. Die Spannung U wird mittels eines Spannungssensors 24 eingangsseitig des Gleichrichters 3 erfasst. Die Erfassung kann nach Bedarf auf der Primärseite 5 oder auf der Sekundärseite 6 der ersten Transformatoranordnung 4 erfolgen.

In einem Schritt S2 nimmt die Steuereinrichtung 15 einen Strom I entgegen. Der Strom I wird mittels eines Stromsensors 25 ausgangsseitig des Gleichrichters 3 und der Zusatzeinheit 9 erfasst.

In einem Schritt S3 ermittelt die Steuereinrichtung 1 5 die Steuersignale C 1 für den Gleichrichter 3, sofern der Gleichrichter 3 als Thyristorgleichrichter ausgebildet ist. Die Ermittlung der Steuersignale C 1 erfolgt in diesem Fall derart, dass sie im stationären Betrieb mit einem konstanten Steuerwinkel α des Thyristorgleichrichters korrespondieren, insbesondere mit einem Steuerwinkel von 0°. Im Falle der Ausgestaltung des Gleichrichters 3 als Diodengleichrichter kann der Schritt S3 entfallen.

In einem Schritt S4 ermittelt die Steuereinrichtung 15 die Steuersignale C2 für den Transistorstromrichter 11. Die Ermittlung der Steuersignale C2 erfolgt derart, dass eine Amplitude der dem Gleichrichter 3 zugeführten Wechselspannung derart eingestellt wird, dass der Gleichrichter 3 zum Gleichspannungszwischenkreis 8 hin ein vorbestimmtes Spannungsniveau zur Verfügung stellt, und beim Betrieb des Gleichrichters 3 auftretende Netzrückwirkungen auf das Wechselspannungsnetz 7 so weit wie möglich ausgeglichen werden. Die Steuersignale C2 werden also derart ermittelt, dass ein Effektivwert der Spannung U einer Sollspannung U* so weit wie möglich angenähert wird und Oberschwingungen so weit wie möglich kompensiert werden. Die Regelung des Schrittes S4 ist also auf den Momentanwert der Spannung U bezogen, nicht auf den über eine Periode der Wechselspannung gemittelten Wert.

In einem Schritt S5 ermittelt die Steuereinrichtung 15 die Steuersignale C3 für den Gleichspannungswandler 12. Die Ermittlung der Steuersignale C3 erfolgt derart, dass Schwankungen des Stromes I im Gleichspannungszwischenkreis 8 so weit wie möglich ausgeglichen werden. Die Steuereinrichtung 15 berücksichtigt bei der Ermittlung der Steuersignale C3 die elektrische Bilanz des Transistorstromrichters 11, wie sie sich durch die Ansteuerung des Transistorstromrichters 11 gemäß den Steuersignalen C2 ergibt. Die Steuersignale C3 werden also derart ermittelt, dass der Strom I einem Sollstrom I* so weit wie möglich wird. Entsprechende Auswertungen zur Ermittlung der Stromwelligkeit sind Fachleuten allgemein bekannt. Die Regelung des Schrittes S5 ist - analog zum Schritt S4 auf den Momentanwert bezogen, also nicht auf den über eine Periode der Wechselspannung gemittelten Wert.

In einem Schritt S6 steuert die Steuereinrichtung 15 den Transistorstromrichter 11 und den Gleichspannungswandler 12 und gegebenenfalls auch den Thyristorgleichrichter 3 entsprechend der in den Schritten S3 bis S5 ermittelten Steuersignale C1, C2, C3 an.

FIG 6 zeigt zugleich auch zwei vorteilhafte Ausgestaltungen des Betriebsverfahrens.

Zum einen kann entsprechend der Darstellung des Schrittes S3 die vom Transistorstromrichter 11 eingangsseitig bezogene Energie E nach Bedarf - aber natürlich nicht zum gleichen Zeitpunkt - positiv oder negativ sein. Die Zusatzeinheit 9 - genauer: der Transistorstromrichter 11 - wird von der Steuereinrichtung 15 also derart gesteuert, dass sie zum Ausgleichen der Spannungsschwankungen in Abhängigkeit von der erfassten Wechselspannung U nach Bedarf Energie in den Gleichspannungszwischenkreis 8 einspeist oder Energie aus dem Gleichspannungszwischenkreis 8 entnimmt.

Zum anderen wird die über die Zusatzeinheit 9 fließende Energie E von der Steuereinrichtung 15 auf einen Wert begrenzt, der bei maximal 20 % der über den Thyristorgleichrichter 3 fließenden elektrischen Energie E' liegt. Vorzugsweise erfolgt sogar eine Begrenzung auf einen niedrigeren Wert von maximal 15 %. Entsprechend wird die Zusatzeinheit 9 von der Steuereinrichtung 15 gesteuert.

Die vorliegende Erfindung weist viele Vorteile auf. Insbesondere ist die Topologie der Schaltung einfach, robust und zuverlässig. Die entsprechenden Einheiten (Gleichrichter 3, Transistorstromrichter 11, Gleichspannungswandler 12) und deren Ansteuerung sind als solche allgemein bekannt. Die Implementierung der Erfindung ist daher einfach und kostengünstig. Die Stromwelligkeit kann zuverlässig in erheblichem Umfang reduziert werden. Weiterhin kann der Gleichspannungswandler 12 im Falle eines Kurzschlusses im Gleichspannungszwischenkreis 8 den Transistorstromrichter 11 schützen.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1: Elektrolyseanlage
- 2: Energieversorgungseinrichtung
- 3: Gleichrichter
- 4, 10: Transformatoranordnungen
- 5, 13: Primärseiten
- 6, 14: Sekundärseiten
- 7: Wechselspannungsnetz
- 8: Gleichspannungszwischenkreis
- 9: Zusatzeinheit
- 11: Transistorstromrichter
- 12: Gleichspannungswandler
- 15: Steuereinrichtung
- 16: Steuerprogramm
- 17: Befehle
- 18: Transistoren
- 19: Kondensator
- 20: Wechselrichter
- 21: Transformator
- 22: Gleichrichter
- 23: Filterinduktivität
- 24: Spannungssensor
- 25: Stromsensor

- C1, C2, C3: Steuerbefehle
- E, E': Energien
- I: Strom
- I*: Sollstrom
- S1 bis: Schritte
- U: Spannung
- U*: Sollspannung

- α: Steuerwinkel

## Patentansprüche

1. Energieversorgungseinrichtung zum Versorgen einer Elektrolyseanlage (1) mit elektrischer Energie,
- wobei die Energieversorgungseinrichtung einen Gleichrichter (3) und eine erste Transformatoranordnung (4) mit einer Primärseite (5) und einer Sekundärseite (6) aufweist,
- wobei der Gleichrichter (3) über die erste Transformatoranordnung (4) aus einem Wechselspannungsnetz (7) elektrische Energie bezieht und der Elektrolyseanlage (1) die aus dem Wechselspannungsnetz (7) bezogene elektrische Energie über einen Gleichspannungszwischenkreis (8) zuführt,
- wobei die Energieversorgungseinrichtung eine Zusatzeinheit (9) aufweist,
- wobei die Zusatzeinheit (9) eine zweite Transformatoranordnung (10) mit einer Primärseite (13) und einer Sekundärseite (14), einen Transistorstromrichter (11) und einen Gleichspannungswandler (12) aufweist,
- wobei die Primärseite (13) der zweiten Transformatoranordnung (10) mit der Primärseite (5) oder der Sekundärseite (6) der ersten Transformatoranordnung (4) in Reihe geschaltet ist,
- wobei der Transistorstromrichter (11) mit der Sekundärseite (14) der zweiten Transformatoranordnung (10) und dem Gleichspannungswandler (12) verbunden ist,
- wobei der Gleichspannungswandler (12) mit dem Gleichspannungszwischenkreis (8) des Gleichrichters (3) verbunden ist.

2. Energieversorgungseinrichtung nach Anspruch 1,
**dadurch gekennzeichnet,**
**dass** die Zusatzeinheit (9) kleiner als der Gleichrichter (3) dimensioniert ist, so dass über die Zusatzeinheit (9) eine kleinere elektrische Energie (E) fließt als über den Gleichrichter (3).

3. Energieversorgungseinrichtung nach Anspruch 1 oder 2,
**dadurch gekennzeichnet,**
**dass** der Gleichspannungswandler (12) als verschachtelter Buck-Boost-Wandler ausgebildet ist.

4. Energieversorgungseinrichtung nach Anspruch 1, 2 oder 3,
**dadurch gekennzeichnet,**
**dass** der Gleichspannungswandler (12) als potenzialtrennender Gleichspannungswandler ausgebildet ist.

5. Energieversorgungseinrichtung nach einem der obigen Ansprüche,
**dadurch gekennzeichnet,**
**dass** der Transistorstromrichter (11) als Spannungsgleichrichter ausgebildet ist.

6. Energieversorgungseinrichtung nach einem der obigen Ansprüche,
**dadurch gekennzeichnet,**
**dass** der Transistorstromrichter (11) als einen bidirektionalen Energiefluss ermöglichender Umrichter oder als nur einen unidirektionalen Energiefluss ermöglichender Gleichrichter ausgebildet ist.

7. Betriebsverfahren zum Betreiben einer Energieversorgungseinrichtung (2) nach einem der obigen Ansprüche,
- wobei der Transistorstromrichter (11) von einer Steuereinrichtung (15) derart gesteuert wird, dass eine Amplitude der dem Gleichrichter (3) zugeführten Wechselspannung derart eingestellt wird, dass der Gleichrichter (3) zum Gleichspannungszwischenkreis (8) hin ein vorbestimmtes Spannungsniveau zur Verfügung stellt, und beim Betrieb des Gleichrichters (3) auftretende Netzrückwirkungen auf das Wechselspannungsnetz (7) so weit wie möglich ausgeglichen werden, und
- wobei der Gleichspannungswandler (12) von der Steuereinrichtung (15) unter Berücksichtigung der elektrischen Bilanz des Transistorstromrichters (11), wie sie sich durch die Ansteuerung des Transistorstromrichters (11) ergibt, derart angesteuert wird, dass Stromschwankungen im Gleichspannungszwischenkreis (8) des Gleichrichters (3) weit wie möglich ausgeglichen werden.

8. Betriebsverfahren nach Anspruch 7,
**dadurch gekennzeichnet,**
**dass** die Zusatzeinheit (9) zum Ausgleichen der Spannungsschwankungen in Abhängigkeit von einer eingangsseitig des Gleichrichters (3) erfassten Wechselspannung (U) von der Steuereinrichtung (15) derart gesteuert wird, dass sie nach Bedarf Energie (E) in den Gleichspannungszwischenkreis (8) des Gleichrichters (3) einspeist oder Energie (E) aus dem Gleichspannungszwischenkreis (8) des Gleichrichters (3) entnimmt.

9. Betriebsverfahren nach Anspruch 7 oder 8,
**dadurch gekennzeichnet,**
**dass** der Gleichrichter (3) als Thyristorgleichrichter ausgebildet ist und von der Steuereinrichtung (15) im stationären Betrieb mit einem konstanten Steuerwinkel (α) gesteuert wird, insbesondere mit einem Steuerwinkel (α) von 0°.

10. Steuerprogramm, wobei das Steuerprogramm Befehle (17) umfasst, die bei ihrer Ausführung durch eine Steuereinrichtung (15) für eine Energieversorgungseinrichtung (2) nach einem der Ansprüche 1 bis 6 die Steuereinrichtung (15) veranlassen, die Energieversorgungseinrichtung (2) gemäß einem Betriebsverfahren nach einem der Ansprüche 7 bis 9 zu steuern.

11. Steuereinrichtung, wobei die Steuereinrichtung mit einem Steuerprogramm (16) nach Anspruch 10 programmiert ist, so dass die Steuereinrichtung im Betrieb eine Energieversorgungseinrichtung (2) nach einem der Ansprüche 1 bis 6 gemäß einem Betriebsverfahren nach einem der Ansprüche 7 bis 9 steuert.
